# EUROPÄISCHE PATENTSCHRIFT

(11) **EP 1 008 774 B1**
(45) Veröffentlichungstag und Bekanntmachung des Hinweises auf die Patenterteilung: **03.04.2002**
(21) Anmeldenummer: 99124183.7
(22) Anmeldetag: 03.12.1999
(51) Int. Cl.: F16C 29/00

(54) **Linearführung**
Linear guide
Guidage linéaire

(30) Priorität: 11.12.1998 DE 19857212
(43) Veröffentlichungstag der Anmeldung: 14.06.2000
(73) Patentinhaber: INA Wälzlager Schaeffler oHG, 91072 Herzogenaurach (DE)
(72) Erfinder: Alber, Eberhard, 71272 Renningen (DE)

(56) Entgegenhaltungen:
- DE-U- 29 805 775
- US-A- 4 637 738
- US-A- 4 934 835
- US-A- 5 217 308
- US-A- 5 388 913
- US-A- 5 431 498
- US-A- 5 553 947

## Beschreibung

### Gebiet der Erfindung

Die Erfindung betrifft eine Linearführung mit einer Führungsschiene, welche an einer ortsfesten Unterkonstruktion befestigt und von einem Führungswagen teilweise umgeben ist, der an der Führungsschiene längsverschieblich gelagert ist.

### Hintergrund der Erfindung

Häufig weisen Unterkonstruktionen, an welchen Führungsschienen für Linearführungen montiert werden sollen, Fertigungsungenauigkeiten auf. Eine solche Unterkonstruktion kann beispielsweise aus Einzelteilen zusammengesetzt sein, die miteinander verschweißt sind. Dabei können unebene Anlageflächen für die Führungsschiene entstanden sein. Wenn nun auf einer solchen Unterkonstruktion eine Führungsschiene montiert, z. B. angeschraubt wird, besteht die Gefahr, daß sie ihre exakte Form verliert. Bei einer solchen Führungsschiene für ein Linearwälzlager verlassen also die Laufbahnen für die Wälzkörper ihre exakte Position. Das wirkt sich insbesondere dann ungünstig aus, wenn für ein zu bewegendes Maschinenteil zwei das Teil haltende Führungswagen verwendet werden, die längs zweier paralleler, an der Unterkonstruktion montierter Führungsschienen verschiebbar sein müssen.

Aus dem Katalog Nr. 137 G "THK LM SYSTEM" der Firma THK CO., LTD., Tokio, Japan, ist eine Linearführung der eingangs genannten Art bekannt, bei der für die Führungsschiene eine biegesteife, hohe Bauform gewählt wurde. Diese dort als Schiene mit einem I-Profil bezeichnete Führungsschiene kann sich in geringem Maße durchbiegen. Bei zwei solchen an der Unterkonstruktion parallel montierten Führungsschienen werden Abweichungen in der Parallelität von dem I-Profil der Schiene jeweils dadurch ausgeglichen, daß sich der elastisch dimensionierte Steg der Schiene verformt. Er kann also Parallelitätsfehler in hohem Maße kompensieren, so daß eine genaue Parallelität der Schienen bei schwierigen Montagebedingungen nicht unbedingt erforderlich ist. Solche Führungsschienen mit dem I-Profil haben jedoch den Nachteil, daß sie nicht nur in den Bereichen der Laufbahnen für die Führungswagen, sondern insgesamt aus hochwertigem teueren Stahl bestehen.

Aus dem Dokument US 4 637 738 A ist eine Linearführung mit einer Führungsschiene bekannt, welche an einer ortsfesten Unterkonstruktion befestigt und von einem Führungswagen teilweise umgeben ist, der an der Führungsschiene längsverschieblich gelagert ist. Zur Befestigung an der Unterkonstruktion wird die Führungsschiene an ihren beiden Längsenden von zwei dort angeordneten Klemmschellen gehalten, wobei jede Klemmschelle über ein elastisches Ausgleichsstück an der Unterkonstruktion abgestützt ist. In Folge dieser Anbringung können Durchbiegungen im mittleren Bereich der Führungsschiene und damit ein Abweichen von deren exakter Form nicht ausgeschlossen werden.

### Zusammenfassung der Erfindung

Der Erfindung liegt die Aufgabe zugrunde, eine kostengünstige Anordnung einer Linearführung zu schaffen, die es ermöglicht, daß eine auch an ungenau ausgebildeter Unterkonstruktion montierte Führungsschiene ihre exakte Form für den daran verschiebbaren Führungswagen einhält.

Diese Aufgabe wird erfindungsgemäß dadurch gelöst, daß zwischen der Unterkonstruktion und der Führungsschiene ein als Ausgleichskörper für Maßtoleranzen wirkender elastischer Träger angeordnet ist, welcher die Führungsschiene auf ihrer gesamten Längserstreckung unterstützt, wobei die Führungsschiene mit Schrauben an dem elastischen Träger befestigt ist. Auf diese Weise läßt sich sowohl der Material- als auch der Herstellungsaufwand für die Führungsschiene verringern.

Der elastische Träger kann als Profilkörper aus einem Leichtmetall ausgebildet sein, beispielsweise aus Aluminium oder einem sonstigen weichen Werkstoff mit einem geringen Elastizitätsmodul. Es ist auch ein Tragkörper aus Gummi oder Kunststoff denkbar. Der Träger kann eine rippenförmige oder hohlkammerförmige Gestalt aufweisen und mit einem im Querschnitt offenen oder geschlossenen Profil ausgeführt sein.

Es ist möglich, daß der elastische Träger mit Schrauben an der Unterkonstruktion befestigt ist. Die Schrauben können jeweils in fluchtenden Bohrungen der Führungsschiene, des elastischen Trägers und der Unterkonstruktion angeordnet sein. Bei separater Befestigung ist es auch möglich, daß der elastische Träger für seine Befestigung an der Unterkonstruktion T-förmige Nuten zur Aufnahme von Befestigungsmitteln aufweist.

Wenn die Führungsschiene der Schleifmaschine entnommen wird, an der die Laufbahnen für den Führungswagen bearbeitet worden sind, kann die Schiene ihre exakte Form verlieren. Durch Anschrauben der Führungsschiene an ihrem Einsatzort an einer maßgenauen Unterkonstruktion erhält die Schiene dann ihre für den Betrieb der Linearführung erforderliche genaue Form zurück.

Wenn die Anschraubfläche der Unterkonstruktion nicht maßgenau ausgeführt ist, muß die erforderliche exakte Form der Führungsschiene durch mehr oder weniger starkes Verschrauben mit dem elastischen Ausgleichselement und durch Vermessen der Schienengeradheit beim Verschrauben hergestellt werden.

Der als elastischer Träger ausgeführte Ausgleichskörper ermöglicht während des Überfahrens der Führungsschiene deren exakte Einstellung, so daß zwischen dem Führungswagen und der Führungsschiene unzulässig hohe Kräfte nicht auftreten können.

### Kurze Beschreibung der Zeichnung

Ausführungsbeispiele der Erfindung sind in der Zeichnung dargestellt und werden im folgenden näher beschrieben. Es zeigen
- Figur 1: eine erfindungsgemäße Linearführung im Querschnitt, mit einem an einer Unterkonstruktion befestigten elastischen Träger, an welchem für einen Führungswagen eine Führungsschiene mit Schrauben befestigt ist;
- Figur 2: eine Linearführung in stirnseitiger Ansicht nach dem vorbekannten Stand der Technik, mit zwei parallelen Führungsschienen, die unmittelbar an einer Unterkonstruktion angeschweißt sind;
- Figur 3: eine Linearführung gemäß Figur 1, bei welcher jedoch die Schrauben jeweils auch für die Befestigung des elastischen Trägers an der Unterkonstruktion dienen;
- Figur 4: eine Linearführung mit einem elastischen Träger, an welchem zusätzlich zu einer Führungsschiene eine parallele Laufwelle für einen nicht dargestellten zweiten Führungswagen angebracht ist;
- Figur 5: schematisch eine Linearführung in stirnseitiger Ansicht mit einem Träger, der ein offenes, C-förmiges Profil aufweist;
- Figur 6 u. Figur 7: schematisch Linearführungen in stirnseitiger Ansicht mit Trägern, die geschlossene Profile aufweisen.

### Ausführliche Beschreibung der Zeichnung

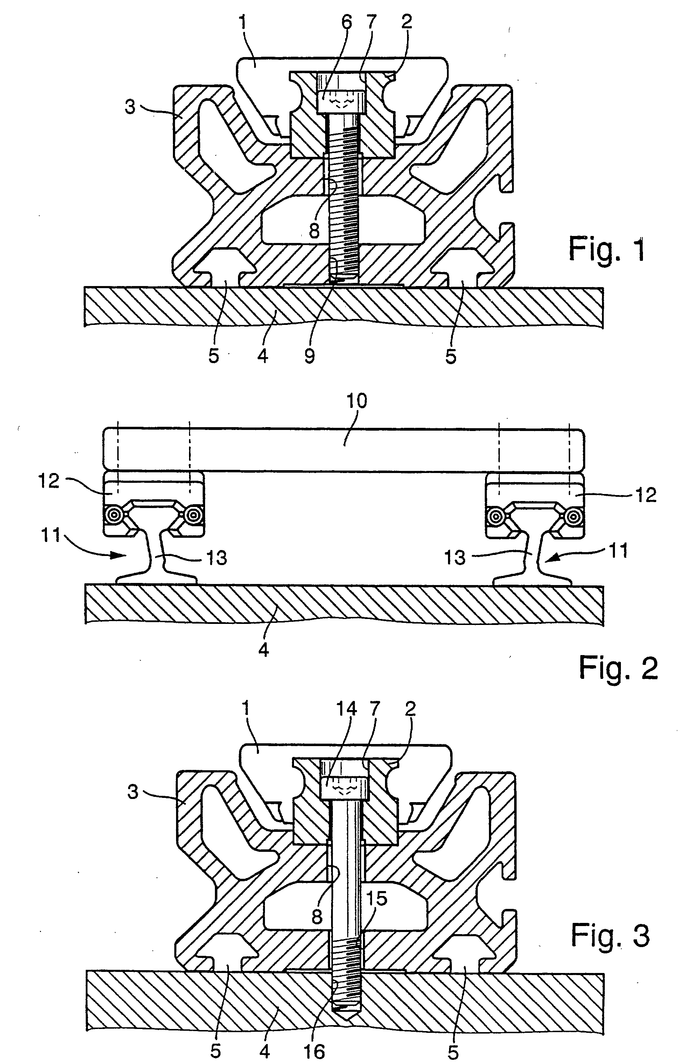

Eine erfindungsgemäße Linearführung enthält einen Führungswagen 1, der an einer Führungsschiene 2 abgestützt und längs dieser verschiebbar ist. Die Führungsschiene 2 ist unter Zwischenschaltung eines elastischen Trägers 3 an einer ortsfesten Unterkonstruktion 4 befestigt. Gemäß Figur 1 ist diese Befestigung mit nicht dargestellten Befestigungsmitteln durchgeführt, die in T-förmigen Nuten 5 des Trägers 3 gehalten sind. Mit diesen Nuten 5 liegt der Träger 3 an der Oberfläche der Unterkonstruktion 4 an. Zur Befestigung der Führungsschiene 2 an dem elastischen Träger 3 dienen Schrauben 6, die in Längsrichtung der Führungsschiene 2 in Abständen hintereinander jeweils in fluchtenden Bohrungen der Führungsschiene 2 und des Trägers 3 eingesetzt sind. So weist die Führungsschiene 2 zentrale Bohrungen 7 und der elastische Träger 3 zentrale Bohrungen 8 und zentrale Gewindebohrungen 9 für die Schrauben 6 auf. Der elastische Träger 3 ist ein Hohlprofilkörper und kann als Aluminium-Strangpreßprofilteil ausgeführt sein, während die Führungsschiene 2 eine Stahlschiene sein kann. Dieser als Profilteil ausgeführte Träger 3 kann sich bei der Montage der Führungsschiene 2 so verformen, daß auch bei Anlage des Trägers 3 an einer nicht ebenen Oberfläche der Unterkonstruktion 4 die exakte gewünschte Anordnung der Führungsschiene 2 für die Linearführung gewährleistet ist.

Demgegenüber zeigt Figur 2 eine vorbekannte Linearführung für ein zu bewegendes Maschinenteil 10, die zwei parallele Führungsschienen 11 mit Führungswagen 12 enthält, wobei die Führungsschienen 11 unmittelbar an der Oberfläche der Unterkonstruktion 4 anliegen und dort verschweißt sind. Eine solche Führungsschiene 11 enthält jeweils einen dünnen, elastisch dimensionierten Steg 13, so daß infolge von Unebenheiten der Oberfläche der Unterkonstruktion 4, an welcher die Führungsschiene 11 unmittelbar anliegt, der elastisch dimensionierte Steg so verformt werden kann, daß die Laufbahnen der Führungsschiene 11 die erforderliche exakte Position für den einwandfreien Betrieb der Linearführung aufweisen. In Figur 2 erhalten dadurch die Laufbahnen beider Führungsschienen 11 den genauen parallelen Verlauf. Die Führungsschiene 11 ist mit ihren Laufbahnen, ihrem Steg 13 und dem an der Unterkonstruktion 4 anliegenden Fuß einstückig ausgeführt, so daß sie aus nur einem einzigen Werkstoff besteht, der wegen der Laufbahnen ein hochwertiger teuerer Werkstoff wie Stahl sein muß.

Figur 3 zeigt eine Befestigungsmöglichkeit des erfindungsgemäßen elastischen Trägers 3 an der Unterkonstruktion 4, bei der die T-förmigen Nuten 5 nicht benötigt werden, weil die verwendeten Schrauben 14 länger ausgeführt sind, als in Figur 1. Jede Schraube 14 ist sowohl in eine Bohrung 7 der Führungsschiene 2 als auch in Bohrungen 8 und 15 des elastischen Trägers 3 als auch in eine Gewindebohrung 16 der Unterkonstruktion 4 eingesetzt.

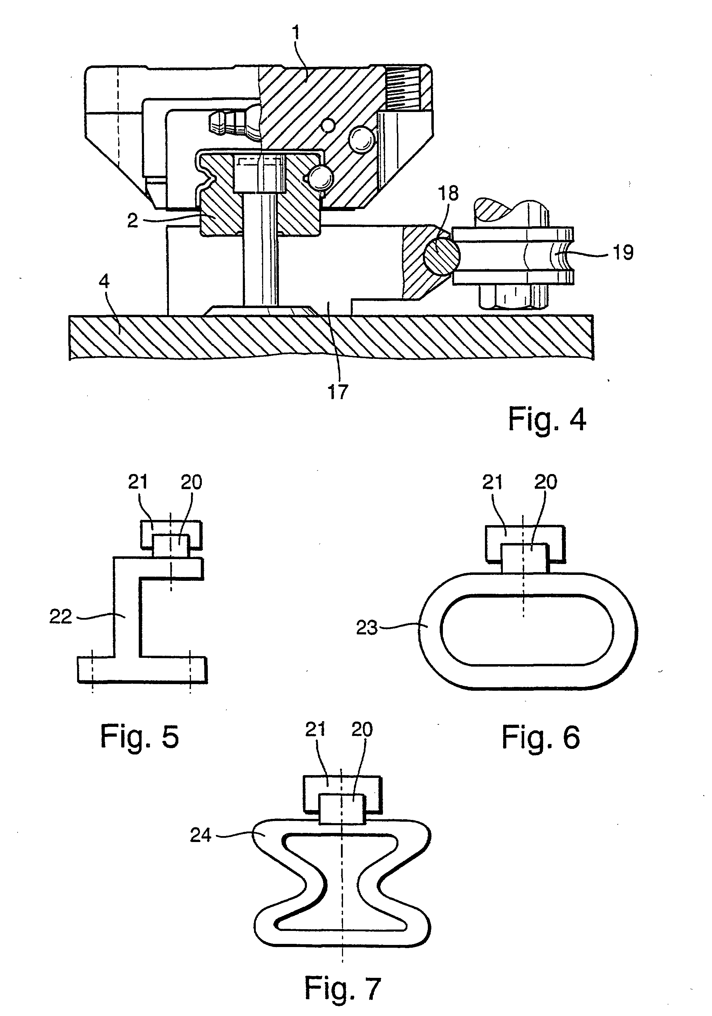

Bei dem Ausführungsbeispiel gemäß Figur 4 ist an der Unterkonstruktion 4 ein elastischer Träger 17 befestigt, an dem nicht nur die Führungsschiene 2, sondern zusätzlich eine dazu parallele Laufwelle 18 für einen weiteren, nicht dargestellten Führungswagen gehalten ist. Dieser weitere Führungswagen stützt sich über Laufrollen 19 an der Laufwelle 18 ab.

Die Figuren 5 bis 7 zeigen weitere Gestaltungsmöglichkeiten für elastische Träger, die zwischen Unterkonstruktionen und Führungsschienen 20 mit Führungswagen 21 angeordnet werden können. Der elastische Träger 22 gemäß Figur 5 ist als offenes, C-förmiges Profil ausgeführt, während der elastische Träger 23 gemäß Figur 6 und der elastische Träger 24 gemäß Figur 7 geschlossene Profile sind. Alle Träger 22, 23 und 24 weisen erfindungsgemäß die erforderliche Verformbarkeit auf.

### Bezugszahlenliste

- 1: Führungswagen
- 2: Führungsschiene
- 3: elastischer Träger
- 4: Unterkonstruktion
- 5: T-förmige Nut
- 6: Schraube
- 7: Bohrung
- 8: Bohrung
- 9: Gewindebohrung
- 10: Maschinenteil
- 11: Führungsschiene
- 12: Führungswagen
- 13: Steg
- 14: Schraube
- 15: Bohrung
- 16: Gewindebohrung
- 17: elastischer Träger
- 18: Laufwelle
- 19: Laufrolle
- 20: Führungsschiene
- 21: Führungswagen
- 22: elastischer Träger
- 23: elastischer Träger
- 24: elastischer Träger

## Patentansprüche

1. Linearführung mit einer Führungsschiene (2, 20), welche an einer ortsfesten Unterkonstruktion (4) befestigt und von einem Führungswagen (1, 21) teilweise umgeben ist, der an der Führungsschiene (2, 20) längsverschieblich gelagert ist, **dadurch gekennzeichnet, daß** zwischen der Unterkonstruktion (4) und der Führungsschiene (2, 20) ein als Ausgleichskörper für Maßtoleranzen wirkender elastischer Träger (3, 17, 22, 23, 24) angeordnet ist, welcher die Führungsschiene (2, 20) auf ihrer gesamten Längserstreckung unterstützt, wobei die Führungsschiene (2) mit Schrauben (6, 14) an dem elastischen Träger (3) befestigt ist.

2. Linearführung nach Anspruch 1, **dadurch gekennzeichnet, daß** der elastische Träger (3, 17, 22, 23, 24) als Profilkörper aus einem Leichtmetall ausgebildet ist.

3. Linearführung nach Anspruch 1, **dadurch gekennzeichnet, daß** der elastische Träger (3) mit Schrauben (14) an der Unterkonstruktion (4) befestigt ist.

4. Linearführung nach Anspruch 1, **dadurch gekennzeichnet, daß** die Schrauben (6) jeweils in fluchtenden Bohrungen (7, 8, 9) der Führungsschiene (2) und des elastischen Trägers (3) angeordnet sind.

5. Linearführung nach Anspruch 1, **dadurch gekennzeichnet, daß** die Schrauben (14) jeweils in fluchtenden Bohrungen (7, 8, 15, 16) der Führungsschiene (2), des elastischen Trägers (3) und der Unterkonstruktion (4) angeordnet sind.

6. Linearführung nach Anspruch 1, **dadurch gekennzeichnet, daß** der elastische Träger (3) für seine Befestigung an der Unterkonstruktion (4) T-förmige Nuten (5) zur Aufnahme von Befestigungsmitteln aufweist.

7. Linearführung nach Anspruch 1, **dadurch gekennzeichnet, daß** an dem elastischen Träger (17) eine zusätzliche Führungsschiene für einen zweiten Führungswagen befestigt ist.

8. Linearführung nach Anspruch 7, **dadurch gekennzeichnet, daß** die zusätzliche Führungsschiene als zu der ersten Führungsschiene (2) parallele Laufwelle (18) für Laufrollen (19) des zweiten Führungswagens ausgebildet ist.

## Claims

1. A linear guide with a guide rail (2, 20) which is attached to a fixed sub-construction (4) and is partially surrounded by a guide carriage (1, 21) which is mounted on the guide rail (2, 20) in a manner so that it can be moved longitudinally, **characterised in that** a resilient support (3, 17, 22, 23, 24), which is effective as an equilibration apparatus for dimensional tolerances, is disposed between the sub-construction (4) and the guide rail (2, 20), supporting the guide rail (2, 20) along its entire longitudinal extent, wherein the guide rail (2) is attached to the resilient support (3) by means of screws (6, 14).

2. A linear guide according to claim 1, **characterised in that** the resilient support (3, 17, 22, 23, 24) is configured as a profile body made of light metal.

3. A linear guide according to claim 1, **characterised in that** the resilient support (3) is attached to the sub-construction (4) by means of screws (14).

4. A linear guide according to claim 1, **characterised in that** the screws (6) are each disposed in flush bores (7, 8, 9) of the guide rail (2) and the resilient support (3).

5. A linear guide according to claim 1, **characterised in that** the screws (14) are each disposed in flush bores (7, 8, 15, 16) of the guide rail (2), the resilient support (3) and the sub-construction (4).

6. A linear guide according to claim 1, **characterised in that** the resilient support (3) has T-shaped grooves (5) to receive attachment means for its attachment to the sub-construction (4).

7. A linear guide according to claim 1, **characterised in that** an additional guide rail for a second guide carriage is attached to the resilient support (17).

8. A linear guide according to claim 7, **characterised in that** the additional guide rail is configured as a running shaft (18) disposed parallel to the first guide rail (2) for rollers (19) of the second guide carriage.

## Revendications

1. Guidage linéaire comprenant un rail de guidage (2, 20) fixé à une infrastructure (4) fixe et entouré partiellement par un chariot de guidage (1, 21) monté coulissant longitudinalement sur le rail (2, 20)
**caractérisé en ce que**
entre l'infrastructure (4) et le rail de guidage (2, 20) se trouve un support élastique (3, 17, 22, 23, 24) servant à compenser les tolérances dimensionnelles et soutenant le rail de guidage (2,20) sur toute sa longueur, le rail (2) étant fixé par des vis (6, 14).

2. Guidage linéaire selon la revendication 1,
**caractérisé en ce que**
le support élastique (3, 17, 22, 23, 24) est un corps profilé en métal léger.

3. Guidage linéaire selon la revendication 1,
**caractérisé en ce que**
le support élastique (3) est fixé par des vis (14) à l'infrastructure (4).

4. Guidage linéaire selon la revendication 1,
**caractérisé en ce que**
les vis (6) sont montées chacune dans des perçages alignés (7, 8, 9) du rail de guidage (2) et du support élastique (9).

5. Guidage linéaire selon la revendication 1,
**caractérisé en ce que**
les vis (14) sont montées chacune dans des perçages alignés (7, 8, 15, 16) du rail de guidage (2), du support élastique (3) et de l'infrastructure (4).

6. Guidage linéaire selon la revendication 1,
**caractérisé en ce que**
le support élastique (3), pour sa fixation à l'infrastructure (4) présente des rainures (5) en forme de T, pour accueillir des moyens de fixation.

7. Guidage linéaire selon la revendication 1,
**caractérisé en ce que**
sur le support élastique (17) est fixé un rail de guidage supplémentaire, pour un second chariot de guidage.

8. Guidage linéaire selon la revendication 7,
**caractérisé en ce que**
le rail de guidage supplémentaire est constitué sous la forme d'une barre de circulation (18) parallèle au premier rail de guidage (2) et servant de piste à des galets de roulement (19) du second chariot de guidage.
